# EUROPEAN PATENT SPECIFICATION

(11) **EP 4 312 450 B1**
(45) Date of publication and mention of the grant of the patent: **21.05.2025**
(21) Application number: 23187163.3
(22) Date of filing: 24.07.2023
(51) Int. Cl.: H04W 36/18

(54) **INTERWORKING WITHOUT N26 INTERFACE SUPPORT OR NOT SUPPORTED RECEIVED IN NON-3GPP ACCESS**
ZUSAMMENARBEIT OHNE N26-SCHNITTSTELLENUNTERSTÜTZUNG ODER OHNE UNTERSTÜTZTEN EMPFANG IM NICHT-3GPP-ZUGRIFF
INTERFONCTIONNEMENT SANS PRISE EN CHARGE D'INTERFACE N26 OU NON REÇU DANS UN ACCÈS NON 3GPP

(30) Priority: 28.07.2022 US 202263369669 P; 04.07.2023 US 202318218099
(43) Date of publication of application: 31.01.2024
(73) Proprietor: MEDIATEK INC., Hsinchu City 30078 (TW)
(72) Inventor: LIN, Yuan-Chieh, Hsinchu City 30078 (TW); YANG, Yung-Chun, Hsinchu City 30078 (TW); LIN, Yu-Hsin, Hsinchu City 30078 (TW)
(74) Representative: Hoefer & Partner Patentanwälte mbB

(56) References cited:
- EP-A2- 3 866 498
- "5G ; Non-Access-Stratum (NAS) protocol for 5G System (5GS); Stage 3 (3GPP TS 24.501 version 16.12.0 Release 16)", vol. 3GPP CT, no. V16.12.0, 25 July 2022 (2022-07-25), pages 1 - 760, XP014440376, Retrieved from the Internet <URL:http://www.etsi.org/deliver/etsi_ts/124500_124599/124501/16.12.00_60/ts_124501v161200p.pdf> [retrieved on 20220725]

## Description

### CROSS REFERENCE TO RELATED APPLICATIONS

This application claims priority under 35 U.S.C. §119 from U.S. Provisional Application Number 63/369,669, entitled "Interworking without N26 interface support or not supported received in non-3GPP access", filed on July 28, 2022.

### TECHNICAL FIELD

The disclosed embodiments relate generally to wireless communication, and, more particularly, to performing inter-system change and handling indication of interworking without N26 interface supported when received over non-3GPP access.

### BACKGROUND

Third generation partnership project (3GPP) and 5G New Radio (NR) mobile telecommunication systems provide high data rate, lower latency and improved system performances. In 3GPP NR, 5G terrestrial New Radio (NR) access network (includes a plurality of base stations, e.g., Next Generation Node-Bs (gNBs), communicating with a plurality of mobile stations referred as user equipment (UEs). Orthogonal Frequency Division Multiple Access (OFDMA) has been selected for NR downlink radio access scheme due to its robustness to multipath fading, higher spectral efficiency, and bandwidth scalability. Multiple access in the downlink is achieved by assigning different sub-bands (i.e., groups of subcarriers, denoted as resource blocks (RBs)) of the system bandwidth to individual users based on their existing channel condition.

In 5GS, as e.g. defined in 3GPP TS 24.501 version 16.12.0 Release 16, UEs can be simultaneously registered and connected to both 3GPP access and non-3GPP access (using NAS signalling), thus the 5GS is able to take advantage of these multiple accesses to improve the user experience and optimize the traffic distribution across various accesses. When a UE registers to 3GPP or non-3GPP access, the UE will receive a REGISTRATION ACCEPT message, carrying a 5GS network feature support IE, which in turn carries an indication "interworking without N26 interface supported" or an indication "interworking without N26 interface not supported". In another word, an IWK N26 bit in the 5GS network feature support IE can be set to "interworking without N26 interface supported" or "interworking without N26 interface not supported".

In current protocol, if a UE is registered to 3GPP access to first network with a first configuration: "interworking without N26 interface supported" or "interworking without N26 interface not supported", and the UE is registered to non-3GPP access to second network with a second configuration. Then the UE will consider using the second configuration in the first network, the first network and second network can be same PLMN, or different PLMNs, same SNPN, or different SNPNs. However, such UE behavior may not be correct.

### SUMMARY

A method and a user equipment according to the invention are defined in the independent claims. The dependent claims define preferred embodiments thereof. A method of performing intersystem change without N26 interface supported or not supported when a UE is registered to the same or different networks over 3GPP and non-3GPP accesses is proposed. UE registers to one or more PLMN/SNPN over 3GPP access and non-3GPP access. UE receives a REGISTRATION ACCEPT message over 3GPP access, which carries a first 5GS network feature support IE, which indicates that interworking without N26 interface not supported. UE also receives a REGISTRATION ACCEPT message over non-3GPP access, which carries a second 5GS network feature support IE, which indicates that interworking without N26 interface supported. UE ignores the second indication received over non-3GPP access and considers that N26 interface is supported for interworking. As a result, after intersystem change from 5G to 4G, UE triggers a TAU procedure over LTE in 4G EPS.

In one embodiment, a UE maintains one or more Protocol Data Unit (PDU) sessions in 5GS, wherein the UE is registered to a first network via a first access type, and wherein the first network indicates interworking without N26 interface not supported. The UE receives a REGISTRATION ACCEPT message over a second access type from a second network, wherein the second network indicates interworking without N26 interface supported. The UE performs an intersystem change from 5GS to EPS. The UE ignores the indication from the second network. The UE triggers a tracking area update (TAU) procedure in EPS. The first access type is 3GPP access, and the second access type is non-3GPP access.

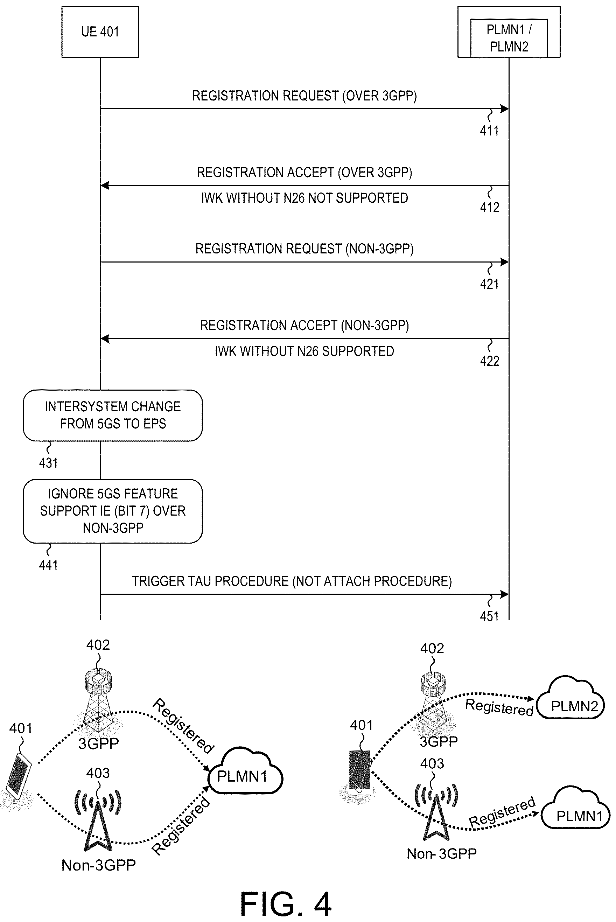

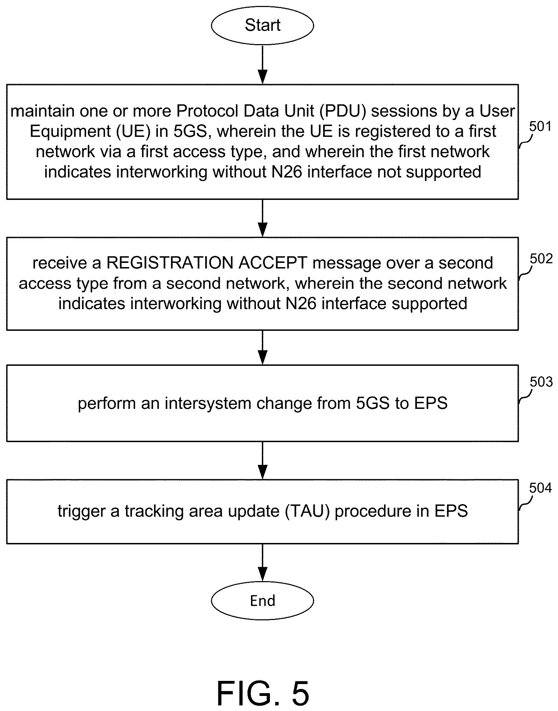

Other embodiments and advantages are described in the detailed description below. This summary does not purport to define the invention. The invention is defined by the claims. In the following, the invention is best understood in view of Figures 4 and 5. The remaining embodiments, aspects, or examples are included in order to help the reader better understand the invention.

### BRIEF DESCRIPTION OF THE DRAWINGS

The accompanying drawings, where like numerals indicate like components, illustrate embodiments of the invention.
Figure 1 illustrates an exemplary 5G network and a method of performing intersystem change without N26 interface supported or not supported when a User Equipment (UE) is registered to the same or different networks over 3GPP access and non-3GPP accesses in accordance with an exemplary aspect.
Figure 2 illustrates simplified block diagrams of a user equipment (UE) and a network entity in accordance with an exemplary aspect.
Figure 3 illustrates the content of a REGISTRATION ACCEPT message and a 5GS NETWORK FEATURE SUPPORT IE with IWK N26 interface support indication.
Figure 4 illustrates a sequence flow between a UE and a network entity for performing intersystem change based on N26 interface (not) supported indication received over 3GPP or non-3GPP access in accordance with one novel aspect.
Figure 5 is a flow chart of a method of performing intersystem change without N26 interface supported or not supported when UE is registered to the same or different networks over 3GPP and non-3GPP accesses in accordance with one novel aspect of the present invention.

### DETAILED DESCRIPTION

Reference will now be made in detail to some embodiments of the invention, examples of which are illustrated in the accompanying drawings.

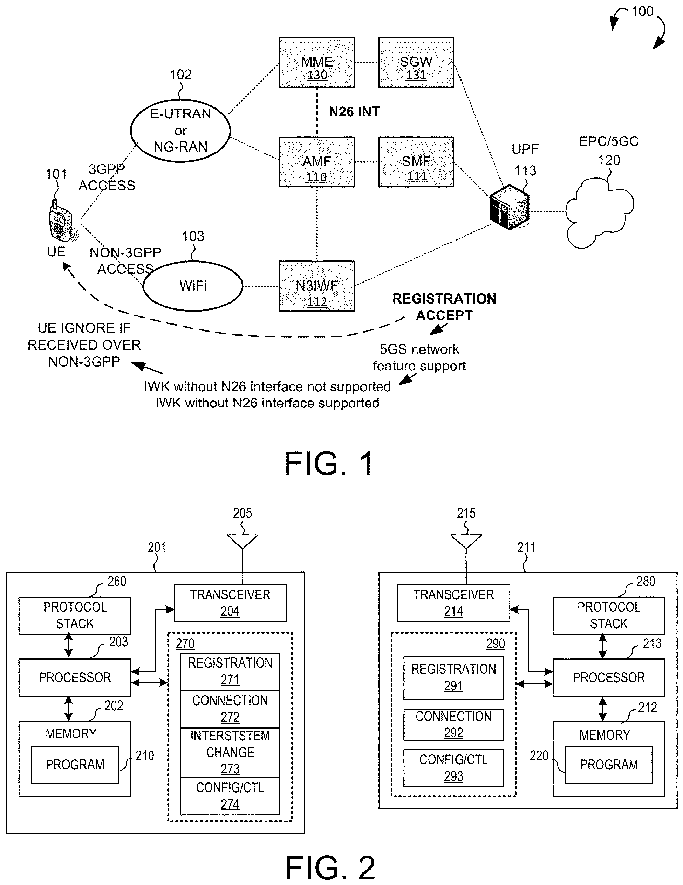

Figure 1 illustrates an exemplary 5G network and a method of performing intersystem change without N26 interface supported or not supported when a User Equipment (UE) is registered to the same or different networks over 3GPP access and non-3GPP accesses in accordance with one novel aspect. 5G/4G network 100 comprises a user equipment (UE) 101, a 3GPP access 102 (e.g., a 3GPP radio access network (E-UTRAN or NG-RAN)), a non-3GPP access 103 (e.g., a non-3GPP WiFi), an access and mobility management function (AMF) 110 or a mobility management entity (MME) 130, a session management function (SMF) 111 or a serving gateway (SGW) 131, a non-3GPP interworking function (N3IWF) 112, a user plane function (UPF) 113, and a 5G core or evolved packet core (5GC or EPC) data network 120. In 5G, the AMF 110 communicates with the base stations in the 3GPP access 102, the SMF 111, and the UPF 113 for access and mobility management of wireless access devices in the 5G network 100. The SMF 111 is primarily responsible for interacting with the decoupled data plane, creating, updating, and removing PDU sessions and managing session context with the UPF 113. The N3IWF 112 interfaces to 5G core network control plane functions, responsible for routing messages outside 5G RAN.

In Access Stratum (AS) layer, an RAN provides radio access for the UE 101 via a radio access technology (RAT). In Non-Access Stratum (NAS) layer, the AMF 110 and the SMF 111 communicate with RAN and 5GC for access and mobility management and PDU session management of wireless access devices in the 5G network 100. The 3GPP access 102 may include base stations (gNBs or eNBs) providing radio access for the UE 101 via various 3GPP RATs including 5G, 4G, and 3G/2G. The non-3GPP access 103 may include access points (APs) providing radio access for the UE 101 via non-3GPP RAT including WiFi. The UE 101 can obtain access to data network 120 through 3GPP access 102, AMF 110/MME 130, SMF 111/SGW 131, and UPF 113. The UE 101 can obtain access to data network 120 through non-3GPP access 103, N3IWF 112, AMF/MME, SMF/SGW, and UPF 113. The UE 101 may be equipped with a single radio frequency (RF) module or transceiver or multiple RF modules or transceivers for services via different RATs/CNs. In some examples, UE 101 may be a smart phone, a wearable device, an Internet of Things (IoT) device, a tablet, etc.

In 5GS, a protocol data unit (PDU) session defines the association between a UE and the data network that provides a PDU connectivity service. The PDU session establishment is a parallel procedure of PDN connection (bearer) procedure in 4G/LTE. When the UE has at least one active PDU session, an intersystem change from 5G N1 mode to 4G S1 mode may occur, it involves an N26 interface: an interface between a mobility management entity (e.g., MME 130) in EPS and an access and mobility management function (e.g., AMF 110) in 5GS.

When a UE registers to 3GPP or non-3GPP access, the UE will receive a REGISTRATION ACCEPT message, carrying a 5GS network feature support IE, which in turn carries an indication "interworking without N26 interface supported" or an indication "interworking without N26 interface not supported". In another word, an IWK N26 bit in the 5GS network feature support IE can be set to "interworking without N26 interface supported" or "interworking without N26 interface not supported". In current protocol, if a UE is registered to 3GPP access to a first network with a first configuration: "interworking without N26 interface supported" or "interworking without N26 interface not supported", and the UE is registered to non-3GPP access to a second network with a second configuration. Then the UE will consider using the second configuration in the first network. However, such UE behavior may not be correct, especially if the second configuration is related to interworking feature support that is received over non-3GPP access type, because N26 is a 3GPP-specific configuration and it can be ignored when the UE receives related information over non-3GPP access.

In accordance with one novel aspect, a method of performing intersystem change without N26 interface supported or not supported when UE is registered to the same or different networks over 3GPP and non-3GPP accesses is proposed. As depicted in Figure 1, UE 101 registers to one or more Public Land Mobile Network (PLMN) or Standalone Non-Public Network (SNPN) over 3GPP access 102 and non-3GPP access 103. UE 101 receives a REGISTRATION ACCEPT message over 3GPP access, which carries a first 5GS network feature support IE, which indicates that interworking without N26 interface not supported (e.g., N26 interface is supported for interworking). UE 101 also receives a REGISTRATION ACCEPT message over non-3GPP access, which carries a second 5GS network feature support IE, which indicates that interworking without N26 interface supported (e.g., N26 interface is not supported for interworking). UE 101 ignores the second indication received over non-3GPP access and considers that N26 interface is supported for interworking. As a result, after intersystem change from 5G to 4G, UE 101 triggers a TAU procedure (not ATTACH procedure) over LTE in 4G EPS.

Figure 2 illustrates simplified block diagrams of wireless devices, e.g., a UE 201 and a network entity 211 in accordance with an exemplary aspect. Network entity 211 may be a base station and/or an AMF/SMF. Network entity 211 has an antenna 215, which transmits and receives radio signals. A radio frequency RF transceiver module 214, coupled with the antenna, receives RF signals from antenna 215, converts them to baseband signals and sends them to processor 213. RF transceiver 214 also converts received baseband signals from processor 213, converts them to RF signals, and sends out to antenna 215. Processor 213 processes the received baseband signals and invokes different functional modules to perform features in base station 211. Memory 212 stores program instructions and data 220 to control the operations of base station 211. In the example of Figure 2, network entity 211 also includes protocol stack 280 and a set of control function modules and circuits 290. Protocol stacks 280 includes Non-Access-Stratum (NAS) layer to communicate with an AMF/SMF/MME entity connecting to the core network, Radio Resource Control (RRC) layer for high layer configuration and control, Packet Data Convergence Protocol/Radio Link Control (PDCP/RLC) layer, Media Access Control (MAC) layer, and Physical (PHY) layer. In one example, control function modules and circuits 290 includes a registration circuit 291 that handles registration procedures, a connection handling circuit 292 that handles signaling connections, and a configuration and control circuit 293 that provides different parameters to configure and control UE of related functionalities including registration and paging. The network entity 211 can be one 5GS network component or more than one 5GS network components (e.g., access network + AMF + N3IWF + SMF, etc.)

Similarly, UE 201 has memory 202, a processor 203, and radio frequency (RF) transceiver module 204. RF transceiver 204 is coupled with antenna 205, receives RF signals from antenna 205, converts them to baseband signals, and sends them to processor 203. RF transceiver 204 also converts received baseband signals from processor 203, converts them to RF signals, and sends out to antenna 205. Processor 203 processes the received baseband signals and invokes different functional modules and circuits to perform features in UE 201. Memory 202 stores data and program instructions 210 to be executed by the processor to control the operations of UE 201. Suitable processors include, by way of example, a special purpose processor, a digital signal processor (DSP), a plurality of micro-processors, one or more micro-processor associated with a DSP core, a controller, a microcontroller, application specific integrated circuits (ASICs), file programmable gate array (FPGA) circuits, and other type of integrated circuits (ICs), and/or state machines. A processor in associated with software may be used to implement and configure features of UE 201.

UE 201 also includes protocol stacks 260 and a set of control function modules and circuits 270. Protocol stacks 260 includes NAS layer to communicate with an AMF/SMF/MME entity connecting to the core network, RRC layer for high layer configuration and control, PDCP/RLC layer, MAC layer, and PHY layer. Control function modules and circuits 270 may be implemented and configured by software, firmware, hardware, and/or combination thereof. The control function modules and circuits, when executed by the processors via program instructions contained in the memory, interwork with each other to allow UE 201 to perform embodiments and functional tasks and features in the network. In one example, control function modules and circuits 270 includes a registration handling circuit 271 that performs registration procedure with the network, a connection handling circuit 272 that handles RRC and NAS signaling connection, a intersystem change handling circuit 273 for performing intersystem change, and a config and control circuit 274 that handles configuration and control parameters including obtaining and determining network feature support.

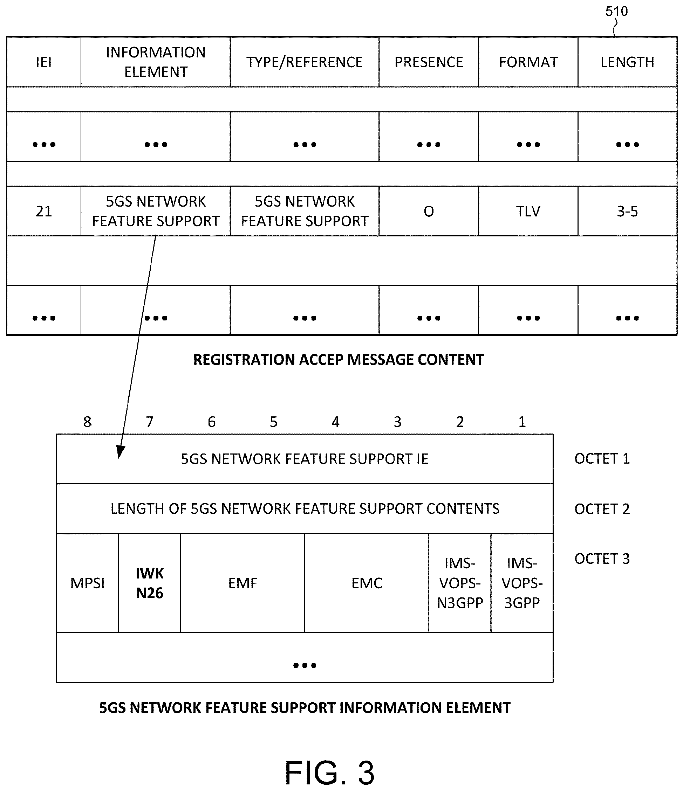

Figure 3 illustrates the content of a REGISTRATION ACCEPT message and a 5GS NETWORK FEATURE SUPPORT IE with IWK N26 interface support indication. When a UE tries to register to a network, the UE sends a REGISTRATION REQUEST message to the network. In response, the UE receives a REGISTRATION ACCEPT message from the network. The REGISTRATION ACCEPT message comprises many information elements (IEs), including a 5GS network feature support IE, as depicted in table 510. The contents of the 5GS network feature support IE in turn are carried by certain bits, each bit indicates whether certain network feature is supported or not supported.

For example, bit 7 of the 5GS network feature support IE carries an IWK N26 indication, which indicates whether interworking without N26 interface is supported or not supported. If IWK N26 (bit 7) == 0, it indicates interworking without N26 interface not supported (e.g., interworking with N26 interface is supported), and if IWK N26 (bit 7) == 1, it indicates interworking without N26 interface supported (e.g., interworking with N26 interface is not supported). Note that the N26 interface is the interface between a mobility management entity (MME) in EPS and an access and mobility management function (AMF) in 5GS. If N26 interface is supported, then upon intersystem change from 5GS to EPS, the PDU session(s) in 5GS will be transferred to corresponding PDN connections by the network, and the UE only needs to initiate a tracking area update (TAU) procedure. On the other hand, if N26 interface is not supported, then upon intersystem change from 5GS to EPS, the UE needs to send an ATTACH REQUEST message containing a PDN CONNECTIVITY REQUEST message with request type set to "handover" or "handover of emergency bearer services" to transfer the PDU session(s) from N1 mode to S1 mode. The UE also needs to initiate PDN connectivity activation procedures for each of the corresponding PDU sessions.

Figure 4 illustrates a sequence flow between a UE and a network entity for performing intersystem change based on N26 interface (not) supported indication received over 3GPP or non-3GPP access in accordance with one novel aspect. In step 411, UE 401 registers to PLMN1 by sending a REGISTRATION REQUEST message over 3GPP access 402, the request message carries UE-Requested information. In step 412, UE 401 receives a REGISTRATION ACCEPT message over 3GPP access, the REGISTRATION ACCEPT message carries a list of information elements (IEs), e.g., a 5GS network feature support IE. For example, the 5GS network feature support IE carries a first IWK N26 indicator (e.g., bit 7 == 0) to indicate that interworking without N26 interface is not supported. In other words, PLMN1 indicates to UE that interworking with N26 interface is supported.

In step 421, UE 401 UE 401 registers to PLMN2 by sending a REGISTRATION REQUEST message over non-3GPP access 403, the request message carries UE-Requested information. In step 422, UE 401 receives a REGISTRATION ACCEPT message over non-3GPP access, the REGISTRATION ACCEPT message carries a list of information elements (IEs), e.g., a 5GS network feature support IE. For example, the 5GS network feature support IE carries a second IWK N26 indicator (e.g., bit 7 == 1) to indicate that interworking without N26 interface is supported. In other words, PLMN2 indicates to UE that interworking with N26 interface is not supported. Typically, UE should update its configuration based on the newly received 5GS network feature support IE. However, because the second IWK N26 indicator is provided via non-3GPP access, and N26 interface is a 3GPP-specific configuration, therefore such indication should be ignored by the UE for intersystem change from 5GS to EPS to handover PDU sessions to PDN connections.

Accordingly, in step 431, UE 401 performs an intersystem change from 5GS to EPS (N1 mode to S1 mode). In step 441, UE 401 ignores the second IWK N26 indicator that is provided via non-3GPP access from PLMN2. As a result, UE 401 knows that interworking with N26 interface is supported by the network, and the PDU sessions in 5GS will be handover to the corresponding PDN connections in EPS by the network. In step 451, UE 401 triggers a TAU procedure (not an ATTACH procedure) in LTE to complete the intersystem change.

The benefit of triggering the TAU procedure is that the UE and the network can carry the 5G registration information and the 5G PDU sessions to 4G in a single TAU procedure. If IWK N26 is not supported, then the UE needs to perform multiple procedures, e.g., an ATTACH procedure and one or more PDN connectivity activation procedures to complete the intersystem change. Note that the first network PLMN1 and the second network PLMN2 can be the same PLMN, or can be different PLMNs. In addition, the first network can be SNPN1, and the second network can be SNPN2, and SNPN1 and SNPN2 can be the same SNPN, or can be different SNPNs. In general, for configurations received over 3GPP and non-3GPP from the first network and the second network, if the first network and the second network are the same, then UE maintains a common configuration; if the first network and the second network are different, then UE maintains two independent configurations. In the case of IWK N26 however, since N26 is a 3GPP-specific configuration, UE should ignore the IWK N26 indicator received over non-3GPP access.

Figure 5 is a flow chart of a method of performing intersystem change without N26 interface supported or not supported when UE is registered to the same or different networks over 3GPP and non-3GPP accesses in accordance with one novel aspect of the present invention. In step 501, a UE maintains one or more Protocol Data Unit (PDU) sessions in 5GS, wherein the UE is registered to a first network via a first access type, and wherein the first network indicates interworking without N26 interface not supported. In step 502, the UE receives a REGISTRATION ACCEPT message over a second access type from a second network, wherein the second network indicates interworking without N26 interface supported. In step 503, the UE performs an intersystem change from 5GS to EPS. In step 504, the UE triggers a tracking area update (TAU) procedure in EPS.

Although the present invention has been described in connection with certain specific embodiments for instructional purposes, the present invention is not limited thereto. Accordingly, various modifications, adaptations, and combinations of various features of the described embodiments can be practiced without departing from the scope of the invention as set forth in the claims.

## Claims

1. A method performed by a User Equipment, UE, the method comprising:
maintaining one or more Protocol Data Unit, in the following also referred to as PDU, sessions by the UE in 5GS, wherein the UE is registered to a first network via a first access type, and wherein the first network indicates interworking without N26 interface not supported (501);
receiving a REGISTRATION ACCEPT message over a second access type from a second network, wherein the second network indicates interworking without N26 interface supported (502);
performing an intersystem change from 5GS to EPS (503) ;
ignoring the indication from the second network (441); and
triggering a tracking area update, in the following also referred to as TAU, procedure in EPS (504),
wherein the first access type is 3GPP access, and wherein the second access type is non-3GPP access.

2. The method of Claim 1, wherein the UE supports sending an ATTACH REQUEST message to transfer the one or more PDU session from 5GS to EPS, and wherein the ATTACH REQUEST message carries a PDN CONNECTIVITY REQUEST message with a request type set to handover.

3. The method of any one of Claims 1 to 2, wherein the UE considers interworking without N26 interface not supported and does not send an ATTACH REQUEST message to EPS.

4. The method of any one of Claims 1 to 3, wherein the REGISTRATION ACCEPT message carries a 5GS network feature support IE with an IWK N26 indication.

5. The method of any one of Claims 1 to 4, wherein the first network and the second network belong to the same public land mobile network, in the following also referred to as PLMN, or the same standalone non-public network, in the following also referred to as SNPN.

6. The method of any one of Claims 1 to 4, wherein the first network and the second network belong to different PLMNs or different SNPNs.

7. A User Equipment, in the following also referred to as UE, comprising:
a connection handling circuit (272) configured to maintain one or more Protocol Data Unit, in the following also referred to as PDU, sessions in 5GS, wherein the UE is registered to a first network via a first access type, and wherein the first network indicates interworking without N26 interface not supported;
a receiver (271) configured to receive a REGISTRATION ACCEPT message over a second access type from a second network, wherein the second network indicates interworking without N26 interface supported;
an intersystem change handling circuit (273) configured to perform an intersystem change from 5GS to EPS;
a processor (203) configured to ignore the indication from the second network; and
a transmitter (204) configured to send a tracking area update, in the following also referred to as TAU, request to trigger a TAU procedure in EPS,
wherein the first access type is 3GPP access, and wherein the second access type is non-3GPP access.

8. The UE of Claim 7, wherein the UE is configured to support sending an ATTACH REQUEST message to transfer the one or more PDU session from 5GS to EPS, and wherein the ATTACH REQUEST message carries a PDN CONNECTIVITY REQUEST message with a request type set to handover.

9. The UE of any one of Claims 7 to 8, wherein the UE is configured to consider interworking without N26 interface not supported and does not send an ATTACH REQUEST message to EPS.

10. The UE of any one of Claims 7 to 9, wherein the REGISTRATION ACCEPT message carries a 5GS network feature support IE with an IWK N26 indication.

11. The UE of any one of Claims 7 to 10, wherein the first network and the second network belong to the same public land mobile network, in the following also referred to as PLMN, or the same standalone non-public network, in the following also referred to as SNPN; or
wherein the first network and the second network belong to different PLMNs or different SNPNs.

## Patentansprüche

1. Verfahren, das von einem Benutzergerät, UE, durchgeführt wird, wobei das Verfahren umfasst:
Aufrechterhalten einer oder mehrerer
Protokolldateneinheit-, im Folgenden auch als PDU bezeichnet, Sitzungen durch das UE in 5GS, wobei das UE in einem ersten Netzwerk über einen ersten Zugangstyp registriert ist, und wobei das erste Netzwerk anzeigt, dass eine Zusammenarbeit ohne N26-Schnittstelle nicht unterstützt wird (501);
Empfangen einer REGISTRATION ACCEPT-Nachricht über einen zweiten Zugangstyp von einem zweiten Netzwerk, wobei das zweite Netzwerk anzeigt, dass eine Zusammenarbeit ohne N26-Schnittstelle unterstützt wird (502);
Durchführen eines Wechsels zwischen Systemen von 5GS zu EPS (503);
Ignorieren der Anzeige von dem zweiten Netzwerk (441); und
Auslösen einer Verfolgungsbereichsaktualisierungs-, im Folgenden auch als TAU bezeichnet, Prozedur in EPS (504),
wobei der erste Zugangstyp 3GPP-Zugang ist, und wobei der zweite Zugangstyp Nicht-3GPP-Zugang ist.

2. Verfahren nach Anspruch 1, wobei das UE das Senden einer ATTACH REQUEST-Nachricht unterstützt, um die eine oder mehreren PDU-Sitzungen von 5GS zu EPS zu transferieren, und wobei die ATTACH REQUEST-Nachricht eine PDN CONNECTIVITY REQUEST-Nachricht mit einem auf Handover eingestellten Anforderungstyp trägt.

3. Verfahren nach einem der Ansprüche 1 bis 2, wobei das UE eine Zusammenarbeit ohne N26-Schnittstelle als nicht unterstützt betrachtet und keine ATTACH REQUEST-Nachricht an EPS sendet.

4. Verfahren nach einem der Ansprüche 1 bis 3, wobei die REGISTRATION ACCEPT-Nachricht ein 5GS Network Feature Support IE mit einer IWK N26-Anzeige trägt.

5. Verfahren nach einem der Ansprüche 1 bis 4, wobei das erste Netzwerk und das zweite Netzwerk zu demselben öffentlichen terrestrischen Mobilfunknetzwerk, im Folgenden auch als PLMN bezeichnet, oder demselben eigenständigen nichtöffentlichen Netzwerk, im Folgenden auch als SNPN bezeichnet, gehören.

6. Verfahren nach einem der Ansprüche 1 bis 4, wobei das erste Netzwerk und das zweite Netzwerk zu unterschiedlichen PLMNs oder unterschiedlichen SNPNs gehören.

7. Benutzergerät, im Folgenden auch als UE bezeichnet, umfassend:
eine Verbindungshandhabungsschaltung (272), die konfiguriert ist, um eine oder mehrere Protokolldateneinheit-, im Folgenden auch als PDU bezeichnet, Sitzungen in 5GS aufrechtzuerhalten, wobei das UE in einem ersten Netzwerk über einen ersten Zugangstyp registriert ist, und wobei das erste Netzwerk anzeigt, dass eine Zusammenarbeit ohne N26-Schnittstelle nicht unterstützt wird;
einen Empfänger (271), der konfiguriert ist, um eine REGISTRATION ACCEPT-Nachricht über einen zweiten Zugangstyp von einem zweiten Netzwerk zu empfangen, wobei das zweite Netzwerk anzeigt, dass eine Zusammenarbeit ohne N26-Schnittstelle unterstützt wird;
eine Handhabungsschaltung für Wechsel zwischen Systemen (273), die konfiguriert ist, um einen Wechsel zwischen Systemen von 5GS zu EPS durchzuführen;
einen Prozessor (203), der konfiguriert ist, um die Anzeige von dem zweiten Netzwerk zu ignorieren; und
einen Sender (204), der konfiguriert ist, um eine Verfolgungsbereichsaktualisierungs-, im Folgenden auch als TAU bezeichnet, Anforderung zum Auslösen einer TAU-Prozedur in EPS zu senden,
wobei der erste Zugangstyp 3GPP-Zugang ist, und wobei der zweite Zugangstyp Nicht-3GPP-Zugang ist.

8. UE nach Anspruch 7, wobei das UE konfiguriert ist, um das Senden einer ATTACH REQUEST-Nachricht zu unterstützen, um die eine oder mehreren PDU-Sitzungen von 5GS zu EPS zu transferieren, und wobei die ATTACH REQUEST-Nachricht eine PDN CONNECTIVITY REQUEST-Nachricht mit einem auf Handover eingestellten Anforderungstyp trägt.

9. UE nach einem der Ansprüche 7 bis 8, wobei das UE konfiguriert ist, um eine Zusammenarbeit ohne N26-Schnittstelle als nicht unterstützt zu betrachten und keine ATTACH REQUEST-Nachricht an EPS sendet.

10. UE nach einem der Ansprüche 7 bis 9, wobei die REGISTRATION ACCEPT-Nachricht ein 5GS Network Feature Support IE mit einer IWK N26-Anzeige trägt.

11. UE nach einem der Ansprüche 7 bis 10, wobei das erste Netzwerk und das zweite Netzwerk zu demselben öffentlichen terrestrischen Mobilfunknetzwerk, im Folgenden auch als PLMN bezeichnet, oder demselben eigenständigen nichtöffentlichen Netzwerk, im Folgenden auch als SNPN bezeichnet, gehören; oder wobei das erste Netzwerk und das zweite Netzwerk zu unterschiedlichen PLMNs oder unterschiedlichen SNPNs gehören.

## Revendications

1. Procédé réalisé par un équipement utilisateur, UE, le procédé comprenant :
le maintien d'une ou plusieurs sessions d'unité de données de protocole, ci-après également appelée PDU, par l'UE dans 5GS, dans lequel l'UE est enregistré auprès d'un premier réseau via un premier type d'accès, et dans lequel le premier réseau indique un interfonctionnement sans interface N26 non prise en charge (501) ;
la réception d'un message d'acceptation d'enregistrement sur un second type d'accès à partir d'un second réseau, dans lequel le second réseau indique un interfonctionnement sans interface N26 prise en charge (502) ;
la réalisation d'un changement d'intersystème de 5GS à EPS (503) ;
l'ignorance de l'indication provenant du second réseau (441) ; et
le déclenchement d'une procédure de mise à jour de zone de suivi, ci-après également appelée TAU, dans EPS (504),
dans lequel le premier type d'accès est un accès 3GPP, et dans lequel le second type d'accès est un accès non 3GPP.

2. Procédé selon la revendication 1, dans lequel l'UE prend en charge l'envoi d'un message ATTACH REQUEST pour transférer la ou les sessions PDU de 5GS à EPS, et dans lequel le message ATTACH REQUEST transporte un message PDN CONNECTIVITY REQUEST avec un type de demande réglé pour un transfert intercellulaire.

3. Procédé selon l'une quelconque des revendications 1 à 2, dans lequel l'UE considère qu'un interfonctionnement sans interface N26 n'est pas pris en charge et n'envoie pas un message ATTACH REQUEST à EPS.

4. Procédé selon l'une quelconque des revendications 1 à 3, dans lequel le message d'acceptation d'enregistrement transporte un IE de prise en charge de caractéristique de réseau 5GS avec une indication IWK N26.

5. Procédé selon l'une quelconque des revendications 1 à 4, dans lequel le premier réseau et le second réseau appartiennent au même réseau mobile terrestre public, ci-après également appelé PLMN, ou au même réseau non public autonome, ci-après également appelé SNPN.

6. Procédé selon l'une quelconque des revendications 1 à 4, dans lequel le premier réseau et le second réseau appartiennent à des PLMN différents ou à des SNPN différents.

7. Équipement utilisateur, ci-après également appelé UE, comprenant :
un circuit de gestion de connexion (272) configuré pour maintenir une ou plusieurs sessions d'unité de données de protocole, ci-après également appelée PDU, dans 5GS, dans lequel l'UE est enregistré auprès d'un premier réseau via un premier type d'accès, et dans lequel le premier réseau indique un interfonctionnement sans interface N26 non prise en charge ;
un récepteur (271) configuré pour recevoir un message d'acceptation d'enregistrement sur un second type d'accès à partir d'un second réseau, dans lequel le second réseau indique un interfonctionnement sans interface N26 prise en charge ;
un circuit de gestion de changement d'intersystème (273) configuré pour réaliser un changement d'intersystème de 5GS à EPS ;
un processeur (203) configuré pour ignorer l'indication provenant du second réseau ; et
un émetteur (204) configuré pour envoyer une demande de mise à jour de zone de suivi, ci-après également appelée TAU, pour déclencher une procédure TAU dans EPS,
dans lequel le premier type d'accès est un accès 3GPP, et dans lequel le second type d'accès est un accès non 3GPP.

8. UE selon la revendication 7, dans lequel l'UE est configuré pour prendre en charge l'envoi d'un message ATTACH REQUEST pour transférer la ou les sessions PDU de 5GS à EPS, et dans lequel le message ATTACH REQUEST transporte un message PDN CONNECTIVITY REQUEST avec un type de demande réglé pour un transfert intercellulaire.

9. UE selon l'une quelconque des revendications 7 à 8, dans lequel l'UE est configuré pour considérer qu'un interfonctionnement sans interface N26 n'est pas pris en charge et n'envoie pas un message ATTACH REQUEST à EPS.

10. UE selon l'une quelconque des revendications 7 à 9, dans lequel le message d'acceptation d'enregistrement transporte un IE de prise en charge de caractéristique de réseau 5GS avec une indication IWK N26.

11. UE selon l'une quelconque des revendications 7 à 10, dans lequel le premier réseau et le second réseau appartiennent au même réseau mobile terrestre public, ci-après également appelé PLMN, ou au même réseau non public autonome, ci-après également appelé SNPN ; ou
dans lequel le premier réseau et le second réseau appartiennent à des PLMN différents ou à des SNPN différents.
